# EUROPÄISCHE PATENTSCHRIFT

(11) **EP 1 898 290 B1**
(45) Veröffentlichungstag und Bekanntmachung des Hinweises auf die Patenterteilung: **14.11.2012**
(21) Anmeldenummer: 07016765.5
(22) Anmeldetag: 27.08.2007
(51) Int. Cl.: G05D 1/02, B66F 9/24

(54) **Flurförderzeugsteuersystem**
Industrial truck control system
Système de guidage pour chariots de manutention

(30) Priorität: 28.08.2006 DE 102006040197
(43) Veröffentlichungstag der Anmeldung: 12.03.2008
(60) Teilanmeldung: 12166972.5
(73) Patentinhaber: Jungheinrich Aktiengesellschaft, 22047 Hamburg (DE)
(72) Erfinder: Tüshaus, Bernd, 85368 Moosburg (DE)
(74) Vertreter: Tiesmeyer, Johannes

(56) Entgegenhaltungen:
- JP-A- 2005 230 032
- US-A- 4 634 142

## Beschreibung

Die Erfindung betrifft ein Flurförderzeugsteuersystem zur Beeinflussung des Fahrbetriebs eines Flurförderzeugs nach Maßgabe von Unregelmäßigkeiten entlang der vom Flurförderzeug zu befahrenden Strecke.

Flurförderzeuge der hier betrachteten Art werden z. B. in Warenlagern oder auf Lagerplätzen für Güter im Freien in der Regel mit möglichst hoher Geschwindigkeit bewegt, um Waren möglichst effizient zu bzw. von ihren Lagerstellen zu transportieren. Generell kommen unterschiedliche Flurförderzeuge zum Einsatz, die von einem Fahrer gelenkt werden oder automatisch, beispielsweise entlang von Induktionsschleifen oder dergleichen, geführt werden.

lm täglichen Einsatz hat sich gezeigt, dass insbesondere bei den manuell bedienten Flurförderzeugen das Wissen, welches ein Fahrer über die zu befahrende Strecke hat, nützlich sein kann, um beispielsweise Schlaglöchern auszuweichen oder sie langsamer zu durchfahren. Häufig kommt es aber vor, dass die Strecken ungeachtet von Bodenunebenheiten, wie beispielsweise Schlaglöchern oder Erhebungen, und ungeachtet von gegebenenfalls entlang der Strecken liegenden Hindernissen, wie beispielsweise aus einem Regal vorstehende Warenpaletten oder neben einem Regal abgestellte Waren, mit zu hoher Geschwindigkeit befahren werden.

Wenn Streckenabschnitte mit Bodenunebenheiten mit sehr hoher Geschwindigkeit durchfahren werden, ergeben sich starke auf das Flurförderzeug und den Fahrer wirkende Stöße, welche beim Fahrzeug zu einem größeren Verschleiß, insbesondere bei der Radaufhängung, und beim Fahrer zu einer erhöhten Gesundheitsgefährdung, insbesondere auch zu Langzeitschäden an der Wirbelsäule, führen können. Ferner kann es vorkommen, dass beim Befahren von Bodenunebenheiten mit hoher Geschwindigkeit eine auf dem Lastteil aufgeladene Ware durch Erschütterungen beschädigt werden kann. Im ungünstigsten Fall kann die aufgeladene Ware auch herunterfallen.

Aus der JP 2005-230032 A ist ein fahrender Reinigungsroboter bekannt, welcher dazu eingerichtet ist, seine Umgebung auf Hindernisse zu inspizieren und seinen Fahrbetrieb auf der Basis von Sensordaten, welche Werte betreffend die Abstände des Reinigungsroboters zu etwaigen Hindernissen umfassen, zu steuern, so dass er bei ggf. reduzierter Geschwindigkeit etwaigen Hindernissen bei seinen Reinigungsfahrten automatisch ausweichen kann. Der fahrbare Reinigungsroboter kann in einem Speicher seiner Steuereinrichtung Umgebungsinformationen speichern.

Aufgabe der Erfindung ist es, ein effizientes Flurförderzeugsteuersystem der eingangs genannten Art für ein Flurförderzeug bereitzustellen, um einen für Fahrzeug und Fahrer sichereren Fahrbetrieb zu gewährleisten.

Diese Aufgabe wird durch ein Flurförderzeugsteuersystem zur Beeinflussung des Fahrbetriebs eines Flurförderzeugs nach Maßgabe von Unregelmäßigkeiten entlang der vom Flurförderzeug zu befahrenden Strecke gelöst, wobei das Steuersystem eine Sensoreinrichtung zur Erfassung von Unregelmäßigkeiten entlang der Strecke in Zuordnung zur Position betreffender Unregelmäßigkeiten, eine Speichereinrichtung zur Speicherung der von der Sensoreinrichtung erfassten Daten, und Mittel zur Beeinflussung des Fahrbetriebs des Flurförderzeugs in Abhängigkeit von der jeweiligen Position des Flurförderzeugs und nach Maßgabe der in der Speichereinrichtung gespeicherten Daten der Sensoreinrichtung umfasst, wobei diese Mittel zur Beeinflussung des Fahrbetriebs dazu eingerichtet sind, Daten zur Steuerung der Hubhöhe eines Lastenteils des Flurförderzeugs zu beeinflussen.

Ein solches Flurförderzeugsteuersystem ermöglicht es, den Fahrbetrieb und die Hubhöhe des Lastenteils des Flurförderzeugs an erfasste und gespeicherte Unregelmäßigkeiten anzupassen. Vorteilhaft ist insbesondere, dass die Daten über die Unregelmäßigkeiten über eine längere Zeitdauer im Steuersystem gespeichert werden können, so dass sie dauernd verfügbar sind und nach einer erstmaligen Einrichtung des Steuersystems nicht unbedingt eine dauernde Erfassung von Daten während des normalen Fahrbetriebs notwendig ist. Selbstverständlich ist es aber bevorzugt, wenn die gespeicherten Daten über Unregelmäßigkeiten aktuell gehalten werden, d.h. periodisch aktualisiert werden, so dass das Steuersystem möglichst die reale Situation entlang von zu befahrenden Strecken für die Steuerung des Fahrbetriebs bereitstellen kann.

Bei der Sensoreinrichtung kann es sich vorzugsweise um optische oder/und elektromagnetische oder/und mechanische Sensoren handeln.

Denkbar sind hier beispielsweise Kameras, die Bilder von der Umgebung der zu befahrenden Strecke machen oder Scanner, welche die Streckenumgebung abtasten und dreidimensionale Daten erzeugen. Ferner können zur Erfassung von Schlaglöchern insbesondere an einem Flurförderzeug piezoelektrische Stoßsensoren oder federartige, mechanische Sensoren zum Einsatz kommen.

Um die Position des Flurförderzeugs und von Unregelmäßigkeiten bestimmen zu können, wird vorgeschlagen, dass die Sensoreinrichtung wenigstens einen Sensor zur Bestimmung der Position des Flurförderzeugs aufweist. Ein solcher Positionssensor kann beispielsweise ein GPS-Sensor sein, sofern der Lagerplatz den Einsatz von GPS erlaubt, oder es können auch andere hinlänglich bekannte Positionsbestimmungssysteme, wie beispielsweise Trackingsysteme in Lagerhallen, funkbasierte Ortungssysteme oder dergleichen zum Einsatz kommen.

Weiterbildend wird vorgeschlagen, dass die Art betreffender Unregelmäßigkeiten automatisch oder durch manuelle Eingabe erfassbar ist. Dabei können als Unregelmäßigkeiten Bodenunebenheiten entlang der Strecke erfassbar sein oder es können Engstellen, Hindernisse und dergleichen entlang der Strecke erfassbar sein.

Je nach Ausgestaltung des Flurförderzeugsteuersystems können die erfassten und gespeicherten Daten über Unregelmäßigkeiten automatisch ausgewertet werden, so dass eine Klassifizierung von erfassten Unregelmäßigkeiten ermöglicht wird. Falls die automatische Auswertung eine ihr unbekannte Unregelmäßigkeit detektiert, kann diese beispielsweise durch manuelle Eingabe einer Bedienperson in ihrer Art bestimmt und klassifiziert werden. Auf Grundlage solcher Klassifizierungen von Unregelmäßigkeiten können dann angepasste Steuerdaten für den Fahrbetrieb ermittelt werden.

Bei den durch die Beeinflussungsmittel beeinflussbaren Steuerdaten des Fahrbetriebs des Flurförderzeugs handelt es sich um Daten zur Steuerung der Hubhöhe eines Lastenteils des Flurförderzeugs und vorzugsweise ferner um Daten zur Steuerung der Geschwindigkeit des Flurförderzeugs oder/und Daten zur Lenkung des Flurförderzeugs.

Wenn beispielsweise sowohl die Geschwindigkeit als auch die Hubhöhe angesteuert werden können, ist es möglich, die Geschwindigkeit des Flurförderzeugs vor dem Durchfahren eines Schlaglochs automatisch zu reduzieren und gegebenenfalls auch die Höhe des Lastteils mit angehobener Last auf eine für diese Fahrsituation unkritische Höhe zu begrenzen bzw. bei Bedarf auf diese Hubhöhe herunterzufahren. Wenn ein Schlagloch eine kritische Tiefe aufweist, so dass eine Durchfahrt durch das Schlagloch ein hohes Unfallrisiko mit sich bringt, ist es auch denkbar, dass das Flurförderzeug nach einer ersten Geschwindigkeitsreduktion in einem Bereich vor dem Schlagloch temporär gestoppt wird.

Vorzugsweise sind die Steuerdaten des Fahrbetriebs durch die Beeinflussungsmittel automatisch beeinflussbar. Hierdurch soll eine Umgehung der Fahrsteuerung durch den Fahrer vermieden werden, so dass der Verschleiß, das Risiko von Gesundheitsschäden beim Fahrer und das Unfallrisiko wirkungsvoll reduziert werden können. Wie bereits angedeutet, kann diese automatische Beeinflussung eine Geschwindigkeitsreduzierung bzw. -begrenzung, oder/und eine Hubhöhenreduzierung bzw. -begrenzung oder/und eine Lenkwinkeleinstellung umfassen, so dass Hindernisse, Engstellen, Schlaglöcher und dergleichen Unregelmäßigkeiten sicher befahren bzw. umfahren bzw. durchfahren werden können.

Es ist bevorzugt, dass das Flurförderzeugsteuersystem Bestandteil des Flurförderzeugs ist und von diesem mitgeführt wird. In einer solchen Ausgestaltung umfasst das Flurförderzeug alle für die Datenerfassung, Datenspeicherung und Auswertung erforderlichen Systemkomponenten, so dass die Festlegung von Steuerdaten für den Fahrbetrieb on-board erfolgen kann.

Alternativ hierzu ist es auch möglich, dass das Flurförderzeugsteuersystem wenigstens teilweise als nicht fahrzeuggebundene Einrichtung ausgeführt ist, wobei zum gegenseitigen Austausch von erfassten Daten oder/und von Steuerdaten des Fahrbetriebs eine Kommunikationsverbindung zwischen dem Flurförderzeug und der nicht fahrzeuggebundenen Einrichtung aufbaubar ist.

Als nicht fahrzeuggebundene Einrichtung kommt beispielsweise ein am Lagerplatz in einem Betriebsraum aufgestellter Zentralrechner in Betracht, auf dem die erfassten Daten gespeichert und ausgewertet werden. Ferner können auch Sensoren zur Erfassung von Unregelmäßigkeiten an Regalen, an einer Hallendecke oder an sonstigen geeigneten Plätzen angebracht werden und mit dem Zentralrechner in Verbindung stehen. Falls das Flurförderzeug über einen Stoßsensor verfügt, können die vom Flurförderzeug erfassten Daten mittels einer Kommunikationsverbindung, insbesondere Funkverbindung, an den Zentralrechner übertragen werden. Der Zentralrechner selbst kann über die Kommunikationsverbindung Steuerdaten über den Fahrbetrieb an das Flurförderzeug senden, so dass dieses nach Maßgabe von allen erfassten und im Zentralrechner gespeicherten Unregelmäßigkeiten betrieben wird.

Um den Betrieb einer an einem Lagerplatz stationierten Flurförderzeugflotte zu ermöglichen, kann das Steuersystem zur Beeinflussung des Fahrbetriebs mehrerer Flurförderzeuge eingerichtet sein. Dabei können die Steuerdaten für den Fahrbetrieb von mehreren Flurförderzeugen entweder von dem Flurförderzeug, welches das zuvor beschriebene Steuersystem on-board aufweist, oder von dem Zentralrechner kommen. Es ist dabei zu beachten, dass das vorgeschlagene Steuersystem derart ausgebildet sein kann, dass es mit Flurförderzeugen unterschiedlicher Bauart oder/und unterschiedlicher Hersteller kommunizieren kann, so dass auch eine heterogene Flotte von nicht baugleichen Flurförderzeugen im Fahrbetrieb nach Maßgabe von gespeicherten Unregelmäßigkeiten gleichartig gesteuert werden kann.

Die der Erfindung zu Grunde liegende Aufgabe wird ferner durch ein Flurförderzeug gelöst, das mit einer Alternative des zuvor beschriebenen Steuersystems, also On-board-Steuersystem oder wenigstens teilweise zentrales Steuersystem, ausgerüstet ist, wobei ein solches Flurförderzeug, wie bereits angedeutet, auch mit weiteren Flurförderzeugen, die nicht über das angesprochene On-board-Steuersystem bzw. Sensoren zur Datenerfassung verfügen, kommunizieren kann.

Die Erfindung betrifft ferner auch eine Flurförderzeugflotte mit mehreren durch ein zuvor beschriebenes Steuersystem im Fahrbetrieb beeinflussbaren Flurförderzeugen, wobei wenigstens eines von diesen ein Flurförderzeug ist mit dem On-board-Steuersystem bzw. mit wenigstens einem Sensor zur Datenerfassung und Übertragung an den Zentralrechner.

Zum Betreiben des beschriebenen Flurförderzeugsteuersystems wird ferner ein Verfahren vorgeschlagen, bei dem Daten über Unregelmäßigkeiten entlang einer von einem Flurförderzeug zu befahrenden Strecke in Zuordnung zur Position betreffender Unregelmäßigkeiten erfasst werden, wobei die erfassten Daten von der Speichereinrichtung gespeichert werden und von den Beeinflussungsmitteln derart verarbeitet werden, dass aus den erfassten Daten Steuerdaten für die Beeinflussung des Fahrbetriebs des Flurförderzeugs ermittelt werden, wobei diese Steuerdaten Daten zur Steuerung der Hubhöhe eines Lastenteils des Flurförderzeugs umfassen.

Die erfassten Daten oder/und die Steuerdaten des Fahrbetriebs können dabei zum Flurförderzeug oder/und zu weiteren Flurförderzeugen oder/und zu einer zentralen Recheneinheit übertragen werden.

Nach einer besonders bevorzugten Weiterbildung wird die Datenerfassung während einer Lernfahrt mit einem Flurförderzeug durchgeführt, welches ein On-board-Steuersystem bzw. wenigstens einen Sensor zur Datenerfassung aufweist.

Die Erfindung wird nachfolgend anhand einer beispielhaften Ausführungsform unter Bezugnahme auf die anliegenden Figuren beschrieben.
- Fig. 1: ist ein Funktionsschema eines On-board-Steuersystems in einem Flurförderzeug und einer Kommunikation mit einem weiteren Flurförderzeug;
- Fig. 2: ist ein Funktionsschema eines auf ein Flurförderzeug und einen Zentralrechner verteilten Steuersystems und einer Kommunikation mit einem weiteren Flurförderzeug;
- Fig. 3: ist eine vereinfachte schematische Draufsicht auf ein Flurförderzeug zwischen zwei Regalen einer Lagerhalle; und
- Fig. 4: ist eine vereinfachte schematische Aufrissansicht in Richtung des Pfeils IV der Figur 3.

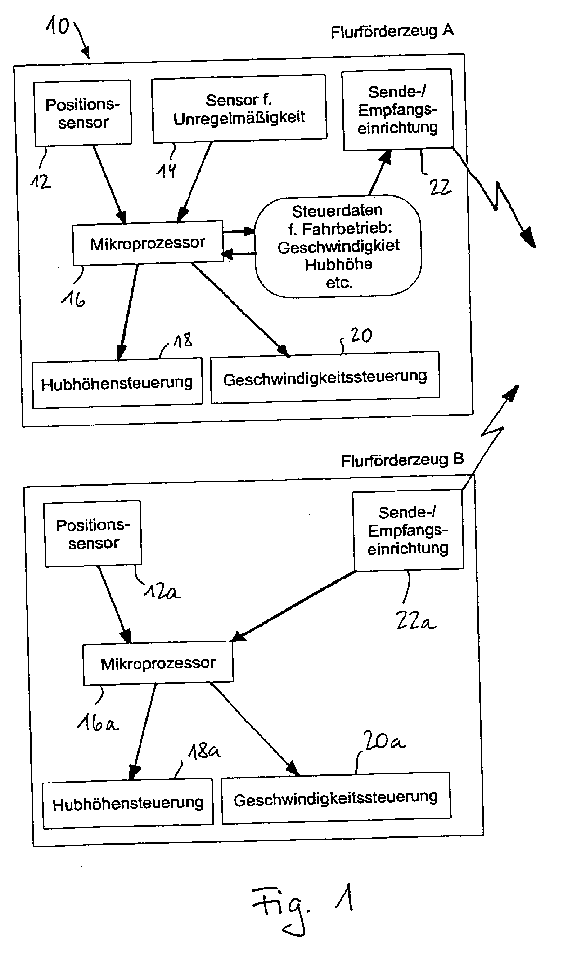

In Figur 1 ist ein vereinfachtes Funktionsschema einer Ausführungsform eines in einem Flurförderzeug A untergebrachten Flurförderzeugsteuersystems 10 dargestellt. Das Steuersystem 10 weist einen Positionssensor 12 zur Bestimmung der Flurförderzeugposition auf und einen Sensor für Unregelmäßigkeiten 14, der Schlaglöcher, Hindernisse und dergleichen erfassen kann. Gegebenenfalls können auch mehrere verschiedenartige Sensoren 14 für die Erfassung von Unregelmäßigkeiten vorgesehen sein, wie beispielsweise bildgebende Sensoren, elektromagnetische Sensoren oder/und mechanische Sensoren. Die erfasste Position des Flurförderzeugs A und vom Sensor 14 erfasste Unregelmäßigkeiten werden an einen Mikroprozessor 16 übergeben, der in Abhängigkeit von der Flurförderzeugposition die Position der Unregelmäßigkeit berechnen kann. Die erfassten Daten über die Unregelmäßigkeiten werden in geeigneter Weise gespeichert, beispielsweise auf einem ausreichend großen Flash-Speicher, einer Festplatte oder dergleichen, welche in der vorliegenden Ausführungsform dem Mikroprozessor 16 zugeordnet sind. Der Mikroprozessor 16 berechnet aus den gespeicherten Daten für Unregelmäßigkeiten Steuerdaten für den Fahrbetrieb, wie beispielsweise reduzierte oder/ und begrenzte Geschwindigkeiten im Bereich von Schlaglöchern oder reduzierte bzw. begrenzte Hubhöhen im Bereich von Hindernissen.

Die so bestimmten Steuerdaten für den Fahrbetrieb werden einerseits zur Fahrsteuerung des Flurförderzeugs A verwendet, wobei der Mikroprozessor entsprechende Signale bzw. Daten an eine Hubhöhensteuerung 18 bzw. eine Geschwindigkeitssteuerung 20 überträgt. Andererseits können die Steuerdaten für den Fahrbetrieb über eine Sende-/Empfangseinrichtung 22 an eine Sende-/Empfangseinrichtung 22a eines weiteren Flurförderzeugs B übertragen werden, beispielsweise über eine Funkverbindung.

Die in der Sende-/Empfangseinrichtung 24 des Flurförderzeugs B angekommenen Steuerdaten werden an einen Mikroprozessor 16a übergeben und in geeigneter Weise gespeichert. Sobald nun Flurförderzeug B, das ebenfalls über einen Positionssensor 12a verfügt, so dass die Position des Flurförderzeugs B jederzeit bestimmbar ist, in den Bereich einer Unregelmäßigkeit kommt, wird es in gleichartiger Weise wie Flurförderzeug A auf Grundlage der Steuerdaten für den Fahrbetrieb gesteuert. Der Mikroprozessor 16a übermittelt in diesem Fall entsprechende Signale/Daten an eine Hubhöhensteuerung 18a bzw. an eine Geschwindigkeitssteuerung 20a des Flurförderzeugs B.

Da das Flurförderzeug A über die zur Erfassung von Unregelmäßigkeiten erforderlichen Sensoren 14 verfügt, kann mit dem Flurförderzeug A eine Lernfahrt für die von Flurförderzeug A und B zu befahrende Strecke durchgeführt werden. Dabei werden alle relevanten Unregelmäßigkeiten erfasst und nach Maßgabe dieser Unregelmäßigkeiten Steuerdaten für den Fahrbetrieb der beiden Flurförderzeuge abgeleitet.

Selbstverständlich können auch mehrere Flurförderzeuge B vorhanden sein, die Steuerdaten für den Fahrbetrieb vom Flurförderzeug A erhalten. Es wird ferner angemerkt, dass die Flurförderzeuge B nicht zwingend von gleicher Bauart sein müssen. Es ist durchaus denkbar, dass unterschiedliche Flurförderzeuge in einer Flotte vorhanden sind, welche über standardisierte Steuersysteme, beispielsweise CAN-Bus, und standardisierte Schnittstellen insbesondere für die Kommunikation untereinander oder mit einer Leitzentrale verfügen.

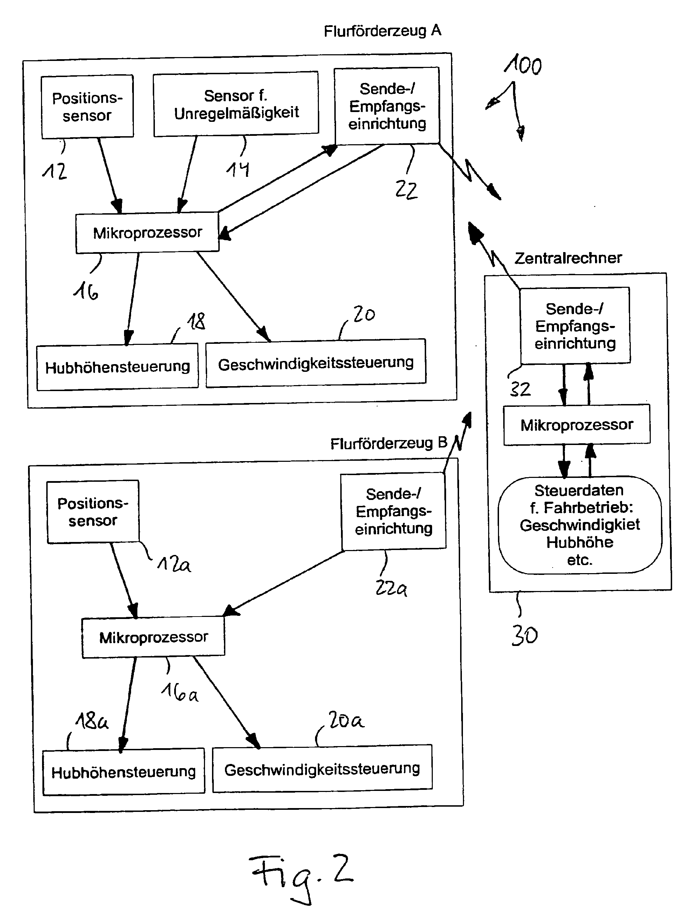

Eine alternative Ausführungsform der Erfindung ist in Figur 2 als Steuersystem 100 bezeichnet, welches teilweise im Flurförderzeug A und in einem Zentralrechner 30 implementiert ist. Das Flurförderzeug A umfasst auch hier den Positionssensor 12, und Sensoren für Unregelmäßigkeiten 14, welche erfasste Daten an den Mikroprozessor 16 übermitteln. Die erfassten Daten werden nun vom Mikroprozessor 16 an die Sende-/Empfangseinheit 22 übertragen und von dieser an eine Sende-/Empfangseinrichtung 32 des Zentralrechners 30 übertragen. Ein Mikroprozessor 34 des Zentralrechners 30 verarbeitet die empfangenen Daten über erfasste Unregelmäßigkeiten und ermittelt die Steuerdaten für den Fahrbetrieb. Der Zentralrechner kann nun die Fahrbetriebssteuerdaten über seine Sende-/Empfangseinrichtung 32 an die Sende-/Empfangseinrichtungen 22, 22a der beiden Flurförderzeuge A und B übermitteln, so dass diese nach Maßgabe der erfassten Unregelmäßigkeiten gesteuert werden können, wie dies bereits unter Bezugnahme auf die Figur 1 beschrieben worden ist.

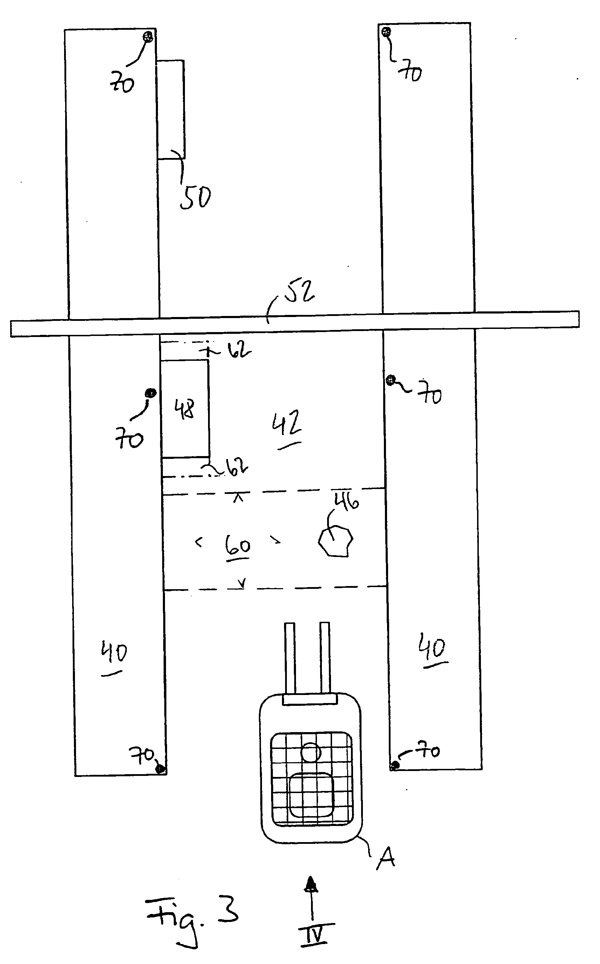

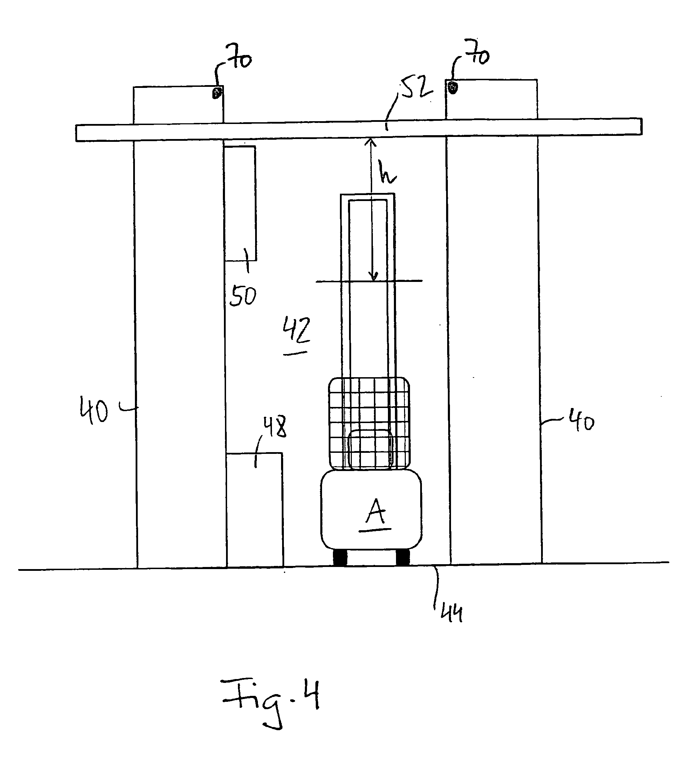

Anhand der Figuren 3 und 4 sollen denkbare Fälle von Unregelmäßigkeiten erläutert werden. Figur 4 stellt dabei eine Aufrissansicht entsprechend dem Pfeil IV der Grundrissdarstellung der Figur 3 dar.

Das Flurförderzeug A befindet sich am Anfang eines zwischen zwei Regalen 40 gebildeten, befahrbaren Korridors 42. lm Boden 44 befindet sich ein Schlagloch 46, dessen Position und ggf. Ausdehnung beim Durchfahren mit dem Flurförderzeug A bestimmt wird. Entlang der befahrbaren Strecke im Korridor 42 befinden sich auf der linken Seite noch zwei aus den Regalen hervorstehende Warenpaletten 48 und 50, wobei die Palette 48 auf dem Boden 44 steht und die Palette 50 auf einem Fachboden des Regals 40 liegt. Ferner verläuft als weitere zu berücksichtigende Unregelmäßigkeit im oberen Bereich der Regale 40 eine Rohrleitung 52.

Die Position und Ausdehnung des Schlaglochs 46, der Paletten 48 und 50 sowie des Rohrs 52 werden von den am Flurförderzeug A vorgesehenen Sensoren erfasst und anschließend gespeichert. Hieraus werden dann vorzugsweise automatisch die Steuerdaten für den Fahrbetrieb des Flurförderzeugs A bzw. B und ggf. weiteren Flurförderzeugen abgeleitet.

Solche Steuerdaten können für die beschriebenen Unregelmäßigkeiten beispielsweise wie folgt aussehen.

Wenn das Flurförderzeug mit seinem Umriss in den Bereich des Schlaglochs 46 kommt, so dass die Gefahr besteht, dass es mit einem seiner Räder in das Schlagloch geraten könnte, wird die Geschwindigkeit des Flurförderzeugs auf beispielsweise die Hälfte der Höchstgeschwindigkeit reduziert bzw. begrenzt. Denkbar ist auch eine Reduzierung der Geschwindigkeit in einem von zwei gestrichelten Linien in Figur 3 begrenzten Bereich 60, der sich über die gesamte Breite des Korridors 42 erstreckt, so dass die Größe des Flurförderzeugs nicht zu berücksichtigen ist.

Bei der am Boden 44 stehenden Warenpalette 48 kann in ähnlicher Weise wie beim Schlagloch 46 eine Geschwindigkeitsreduzierung bzw. -beschränkung vorgesehen werden, so dass ein sicheres Vorbeifahren an der Palette 48 sichergestellt ist. Ferner ist es auch denkbar, seitlich der Palette 48 Bereiche 62 festzulegen, die zu einem Stopp des Flurförderzeugs führen, wenn dieses mit seinem Umriss einen der Bereiche 62 schneidet. Somit könnten Kollisionen zwischen dem Flurförderzeug und der Palette und damit Beschädigung der Ware vermieden werden.

Beim Rohr 52 kann eine Hubhöhenreduzierung bzw. -begrenzung aktiviert werden, so dass eine angehobene Last rechtzeitig vor der Durchfahrt unter dem Rohr 52 auf eine Hubhöhe gesenkt wird, die ein kollisionsfreies Durchfahren unter dem Rohr 52 ermöglicht. Die Hubhöhenbegrenzung richtet sich beispielsweise nach einem Abstand h, der mit der Ware bzw. dem Lastteil von dem Rohr 52 einzuhalten ist. Sofern beim Fahren ein Absenken des Lastteils notwendig ist, um das Rohr 52 passieren zu können, könnte zusätzlich auch eine Geschwindigkeitsreduktion während des Absenkens des Lastteils veranlasst werden.

Aufgrund der aus dem Regal 40 vorstehenden Warenpalette 50, welche sich auf einem oberen Fachboden des Regals befindet, kann beispielsweise eine Hubhöhenbegrenzung beim Passieren vorgesehen sein, die beispielsweise dann eingreift, wenn das Flurförderzeug sehr nahe, beispielsweise mit weniger als 20 cm seitlichem Abstand, an der Palette 50 vorbeifährt. Ist der Abstand größer, kann ein uneingeschränktes Passieren erlaubt sein.

Zusätzlich oder alternativ zu einer automatischen Steuerung ist es auch denkbar, einem Fahrer entsprechende Hinweise über Hindernisse auf einem Display oder dergleichen anzukündigen, so dass dieser entsprechend reagieren und den Fahrbetrieb beeinflussen kann. In diesem Sinne können die Mittel zur Beeinflussung des Fahrbetriebs Signalgeber sein, die den Fahrer des Flurförderzeugs dazu veranlassen, das Fahrzeug mit reduzierter Geschwindigkeit oder/und begrenzter Hubhöhe zu steuern, solange es in der Nähe der detektierten Unregelmäßigkeit ist. Bei einem automatischen Eingriff des Steuersystems kann auch die zeitlich vorausgehende oder gleichzeitige Ausgabe eines akustischen Warnsignals oder/und einer optischen Warnanzeige an den Fahrer erfolgen, so dass dieser darüber informiert ist, warum das Flurförderzeug beispielsweise automatisch abgebremst wird. Eine solche Anzeige wird auch bei den Fahrern die Akzeptanz eines in den manuellen Fahrbetrieb eingreifenden Steuersystems erhöhen.

Die aufgeführten Beispiele dienen einzig der Illustration des Grundgedankens des vorgestellten Steuersystems. Es ist klar, dass die Steuerung des Fahrbetriebs nach Maßgabe von Unregelmäßigkeiten auf der Fahrstrecke auch anders ausgestaltet werden kann. Dabei ist insbesondere auch zu berücksichtigen, dass der normale Betrieb möglichst nicht eingeschränkt wird. Dies bedeutet beispielsweise, dass sich das Flurförderzeug ungehindert in die zur Aufnahme einer der Paletten 48, 50 erforderliche Richtung, nämlich im Wesentlichen orthogonal zum Korridorverlauf, zu den Paletten 48, 50 hin bewegen können muss.

Die in den Figuren 3 und 4 aufgeführten Hindernisse sind rein exemplarisch und es ist klar, dass die dargestellte Häufung von Unregelmäßigkeiten nicht unbedingt der Realität entspricht. Selbstverständlich ist bei einer Implementierung des vorgeschlagenen Steuersystems auch zu berücksichtigen, dass mehrere Unregelmäßigkeiten die Fahrbetriebssteuerung gegenseitig beeinflussen und entsprechende Fallszenarien in Betracht gezogen werden müssen.

Bezug nehmend auf die Figuren 3 und 4 wird schließlich noch darauf hingewiesen, dass auch an den Regalen 40 oder an anderen geeigneten Stellen in einer Lagerhalle oder auf einem Freigelände Sensoren zur Erfassung von Unregelmäßigkeiten vorgesehen werden können. Beispielhaft sind in den Figuren 3 und 4 Sensoren 70 mit Punkten angedeutet, welche beispielsweise als Scanner zur Erfassung von dreidimensionalen Daten oder als Kameras ausgebildet sind.

Der Vollständigkeit halber wird noch darauf hingewiesen, dass die Positionsbestimmung der Flurförderzeuge über bekannte Techniken, wie beispielsweise GPS, Funkortung, Induktionsschleifen und dergleichen erfolgen kann. Das vorgeschlagenen System ist sowohl für automatisch als auch manuell betriebene Flurförderzeuge einsetzbar.

Schließlich sei noch auf folgenden Aspekt der Erfindung hingewiesen. Die in der Speichereinrichtung zur Speicherung der von der Sensoreinrichtung erfassten Daten über Unregelmäßigkeiten entlang der Strecke können auch dazu verwendet werden, das Wartungsmanagement des Flurförderzeugs bzw. mehrerer Flurförderzeuge in dem Sinne zu beeinflussen, dass bei Vorhandensein von Unregelmäßigkeiten, die den Verschleiß des betreffenden Flurförderzeugs beschleunigen können, Wartungsintervalle verkürzt werden oder ggf. eine vorbeugende Sonderwartung des betreffenden Flurförderzeugs ausgelöst wird, etwa durch eine Anzeige auf einem Display des Steuersystems bzw. Flurförderzeugs. Solche Verschleiß beschleunigenden Unregelmäßigkeiten können z. B. Schlaglöcher, abrupte Fahrbahnerhebungen oder Zonen besonderer Fahrbahnrauigkeiten oder Fahrbahnwelligkeiten sein. Weiterhin kann das Steuersystem dazu ausgelegt sein, die in der Speichereinrichtung erfassten Daten über Streckenunregelmäßigkeiten auszuwerten, um Serviceinformationen bzw. spezielle Wartungsbedarfsinformationen bereitzustellen.

Auch kann aus den gespeicherten Daten ein erhöhter Lenk-, Brems- und Wiederanfahrbedarf des betreffenden Flurförderzeugs bei Streckenunregelmäßigkeiten abgeleitet und beim Wartungsmanagement berücksichtigt werden.

Dieser Erfindungsaspekt ermöglicht in vorteilhafter Weise die Optimierung des Wartungsmanagements des Flurförderzeugs oder einer ganzen Flurförderzeugflotte.

Die Beeinflussung des Wartungsmanagements kann aufgrund statistischer Auswertung der in der Speichereinrichtung erfassten Daten über Streckenunregelmäßigkeiten und deren Positionen erfolgen. Vorteilhafterweise umfasst die betreffende Sensoreinrichtung 14 Zählmittel, um zu zählen, wie oft ein betreffendes Flurförderzeug Positionen mit vorher detektierten Unregelmäßigkeiten passiert hat, wobei dann aus der akkumulierten Zahl ein vorgezogener, regelmäßiger oder ggf. gar aufgeschobener Wartungsbedarf des Flurförderzeugs abgeleitet werden kann. Auch für diesen Aspekt der Erfindung kann es ausreichen, dass das Vorhandensein von Unregelmäßigkeiten in Zuordnung von deren Positionen entlang der Strecke von einer Sensoreinrichtung, etwa einer On-board-Sensoreinrichtung 14 eines Flurförderzeugs oder gar gesonderten Messfahrzeugs erfasst wird und die dann in der betreffenden Speichereinrichtung 16 gespeicherten Daten für das Wartungsmanagement weiterer Flurförderzeuge ausgewertet werden. Dem Aspekt der Beeinflussung des Wartungsmanagements eines oder mehrerer Flurförderzeuge im vorstehend erläuterten Sinne kommt im Rahmen der vorliegenden Erfindung selbständige Bedeutung zu, z. B. in dem Sinne, dass bei einem System nach einem oder mehreren der Ansprüche 1 bis 11 anstelle der Mittel (16) zur Beeinflussung des Fahrbetriebs die Mittel zur Ermittlung eines Sollzeitpunktes für die nächste Wartung des Flurförderzeugs nach Maßgabe der in der Speichereinrichtung gespeicherten Daten der Sensoreinrichtung vorgesehen sind.

## Patentansprüche

1. Flurförderzeugsteuersystem (10; 100) zur Beeinflussung des Fahrbetriebs eines Flurförderzeugs (A, B) nach Maßgabe von Unregelmäßigkeiten (46, 48, 50, 52) entlang der vom Flurförderzeug (A, B) zu befahrenden Strecke (42), **gekennzeichnet durch**
- eine Sensoreinrichtung (14) zur Erfassung von Unregelmäßigkeiten (46, 48, 50, 52) entlang der Strecke (42) in Zuordnung zur Position betreffender Unregelmäßigkeiten,
- eine Speichereinrichtung (16) zur Speicherung der von der Sensoreinrichtung erfassten Daten, und
- Mittel (16) zur Beeinflussung des Fahrbetriebs des Flurförderzeugs (A, B) in Abhängigkeit von der jeweiligen Position des Flurförderzeugs (A, B) und nach Maßgabe der in der Speichereinrichtung (16) gespeicherten Daten der Sensoreinrichtung wobei diese Mittel (16) zur Beeinflussung des Fahrbetriebs dazu eingerichtet sind, Daten zur Steuerung der Hubhöhe eines Lastenteils des Flurförderzeugs zu beeinflussen.

2. Flurförderzeugsteuersystem nach Anspruch 1, wobei die Sensoreinrichtung (14) optische oder/und elektromagnetische oder/und mechanische Sensoren umfasst.

3. Flurförderzeugsteuersystem nach Anspruch 2, wobei die Sensoreinrichtung wenigstens einen Sensor (12) zur Bestimmung der Position des Flurförderzeugs aufweist.

4. Flurförderzeugsteuersystem nach einem der Ansprüche 1 bis 3, wobei die Art betreffender Unregelmäßigkeiten (46, 48, 50, 52) automatisch oder durch manuelle Eingabe erfassbar ist.

5. Flurförderzeugsteuersystem nach einem der Ansprüche 1 bis 4, wobei als Unregelmäßigkeiten Bodenunebenheiten (46) entlang der Strecke (42) mittels der Sensoreinrichtung (14) erfassbar sind.

6. Flurförderzeugsteuersystem nach einem der Ansprüche 1 bis 5, wobei als Unregelmäßigkeiten Engstellen, Hindernisse (48, 50, 52) und dergleichen entlang der Strecke (42) erfassbar sind.

7. Flurförderzeugsteuersystem nach einem der vorhergehenden Ansprüche, wobei durch die Beeinflussungsmittel (16) beeinflussbare Steuerdaten des Fahrbetriebs des Flurförderzeugs (A) Daten zur Steuerung der Geschwindigkeit des Flurförderzeugs oder/und Daten zur Lenkung des Flurförderzeugs (A) umfassen.

8. Flurförderzeugsteuersystem nach einem der vorhergehenden Ansprüche, wobei die Steuerdaten des Fahrbetriebs durch die Beeinflussungsmittel (16) automatisch beeinflussbar sind.

9. Flurförderzeugsteuersystem nach einem der vorhergehenden Ansprüche, wobei es Bestandteil des Flurförderzeugs (A) ist und von diesem mitgeführt wird.

10. Flurförderzeugsteuersystem nach einem der Ansprüche 1 bis 8, wobei es wenigstens teilweise als nicht fahrzeuggebundene Einrichtung (30; 70) ausgeführt ist, wobei zum gegenseitigen Austausch von erfassten Daten oder/und von Steuerdaten des Fahrbetriebs eine Kommunikationsverbindung zwischen dem Flurförderzeug (A, B) und der nicht fahrzeuggebundenen Einrichtung (30) aufbaubar ist.

11. Flurförderzeugsteuersystem nach einem der vorhergehenden Ansprüche, wobei es zur Beeinflussung des Fahrbetriebs mehrerer Flurförderzeuge (A, B) eingerichtet ist.

12. Flurförderzeugsteuersystem nach einem der vorhergehenden Ansprüche, wobei es Mittel zur Ermittlung eines Sollzeitpunktes für die nächste Wartung des Flurförderzeugs nach Maßgabe der in der Speichereinrichtung gespeicherten Daten der Sensoreinrichtung, insbesondere nach Maßgabe der Häufigkeit, mit der das Flurförderzeug die Positionen erfasster Unregelmäßigkeiten passiert, umfasst.

13. Flurförderzeugsteuersystem nach einem der vorhergehenden Ansprüche, wobei es Mittel zur Zählung der Häufigkeit, mit der das Flurförderzeug die Positionen erfasster Unregelmäßigkeiten passiert, umfasst.

14. Flurförderzeugsteuersystem nach Anspruch 12 oder 13, wobei es eine Wartungsintervallanzeigevorrichtung umfasst und dazu eingerichtet ist, den ermittelten Sollzeitpunkt für die nächste Wartung des Flurförderzeugs mittels der Wartungsintervallanzeigevorrichtung anzuzeigen.

15. Flurförderzeug (A), das mit einem Flurförderzeugsteuersystem nach einem der vorhergehenden Ansprüche ausgerüstet ist.

16. Flurförderzeugflotte mit mehreren durch ein Flurförderzeugsteuersystem nach einem der Ansprüche 1 bis 14 im Fahrbetrieb beeinflussbaren Flurförderzeugen (A, B), wobei wenigstens eines von diesen ein Flurförderzeug (A) nach Anspruch 15 ist.

17. Verfahren zum Betreiben eines Flurförderzeugsteuersystems für Flurförderzeuge nach einem der Ansprüche 1 bis 11, bei dem Daten über Unregelmäßigkeiten (46, 48, 50, 52) entlang einer von einem Flurförderzeug zu befahrenden Strecke (42) in Zuordnung zur Position betreffender Unregelmäßigkeiten erfasst werden, wobei die erfassten Daten von der Speichereinrichtung (16) gespeichert werden und von den Beeinflussungsmitteln derart verarbeitet werden, dass aus den erfassten Daten Steuerdaten für die Beeinflussung des Fahrbetriebs des Flurförderzeugs (A, B) ermittelt werden, wobei diese Steuerdaten Daten zur Steuerung der Hubhöhe eines Lastenteils des Flurförderzeugs umfassen.

18. Verfahren nach Anspruch 17, wobei die erfassten Daten oder/und die Steuerdaten des Fahrbetriebs zum Flurförderzeug (A) oder/und zu weiteren Flurförderzeugen (B) oder/und zu einer zentralen Recheneinheit (30) übertragen werden.

19. Verfahren nach Anspruch 17 oder 18, **dadurch gekennzeichnet, dass** die Datenerfassung während einer Lernfahrt mit einem Flurförderzeug (A) nach Anspruch 15 durchgeführt wird.

## Claims

1. Industrial truck control system (10; 100) for influencing the driving operation of an industrial truck (A, B) according to irregularities (46, 48, 50, 52) along the route (42) to be travelled by the industrial truck (A, B), comprising
- a sensor device (14) for recording irregularities (46, 48, 50, 52) along the route (42) in assignment to the position of irregularities concerned,
- a memory device (16) for storing the data recorded by the sensor device, and
- means (16) for influencing the driving operation of the industrial truck (A, B) in dependence on the respective position of the industrial truck (A, B) and according to the data of the sensor device stored in the memory device (16), wherein said means (16) for influencing the driving operation being adapted to influence data for controlling the lifting height of a load part of the industrial truck.

2. Industrial truck control system according to claim 1, the sensor device (14) comprising optical and/or electromagnetic and/or mechanical sensors.

3. Industrial truck control system according to claim 2, the sensor device having at least one sensor (12) for determining the position of the industrial truck.

4. Industrial truck control system according to one of claims 1 to 3, it being possible for the type of irregularities concerned (46, 48, 50, 52) to be recorded automatically or by manual input.

5. Industrial truck control system according to one of claims 1 to 4, it being possible for unevennesses of the ground (46) along the route (42) to be recorded by means of the sensor device (14) as irregularities.

6. Industrial truck control system according to one of claims 1 to 5, it being possible for narrow points, obstacles (48, 50, 52) and the like along the route (42) to be recorded as irregularities.

7. Industrial truck control system according to one of the preceding claims, control data for driving operation of the industrial truck (A) that can be influenced by the influencing means (16) comprising data for controlling the speed of the industrial truck and/or data for steering the industrial truck (A).

8. Industrial truck control system according to one of the preceding claims, it being possible for the control data for driving operation to be influenced automatically by the influencing means (16).

9. Industrial truck control system according to one of the preceding claims, it being a component part of the industrial truck (A) and taken along by it.

10. Industrial truck control system according to one of claims 1 to 8, it being possible for it to be configured at least partially as a non-vehicle-bound device (30; 70), wherein a communication link between the industrial truck (A, B) and the non-vehicle-bound device (30) can be set up for the two-way exchange for recored data and/or control data for driving operation.

11. Industrial truck control system according to one of the preceding claims, it being set up for influencing the driving operation of a number of industrial trucks (A, B).

12. Industrial truck control system according to one of the preceding claims, comprising means for determining a desired point in time for the next maintenance of the industrial truck according to the data of the sensor device that are stored in the memory device, in particular according to the frequency with which the industrial truck passes the positions of recorded irregularities.

13. Industrial truck control system according to one of the preceding claims, comprising means for counting the frequency with which the industrial truck passes the positions of recorded irregularities.

14. Industrial truck control system according to claim 12 or 13, it comprising a maintenance interval indicating device and being set up for the purpose of indicating the desired point in time determined for the next maintenance of the industrial truck by means of the maintenance interval indicating device.

15. Industrial truck (A), which is equipped with an industrial truck control system according to one of the preceding claims.

16. Fleet of industrial trucks comprising a number of industrial trucks (A, B) that can be influenced in their driving operation by a control system according to one of claims 1 to 14, wherein at least one of these is an industrial truck (A) according to claim 15.

17. Method of operating an industrial truck control system for industrial trucks according to one of claims 1 to 11, in which data on irregularities (46, 48, 50, 52) along a route (42) to be traveled by an industrial truck are recorded in assignment to the position of irregularities concerned, wherein the recorded data are stored by the memory device (16) and processed by the influencing means in such a way that control data for influencing the driving operation of the industrial truck (A, B) are determined from the recorded data, wherein said control data comprise data for controlling the lift height of a load part of the industrial truck.

18. Method according to claim 17, the recorded data and/or the control data for driving operation being transmitted to the industrial truck (A) and/or to further industrial trucks (B) and/or to a central computing unit (30).

19. Method according to claim 17 or 18, **characterized in that** the data recording is carried out during a learning trip with an industrial truck (A) according to claim 15.

## Revendications

1. Système de guidage pour chariots de manutention (10; 100) pour influencer la conduite d'un chariot de manutention (A, B) en fonction d'irrégularités (46, 48, 50, 52) le long du trajet (42) à parcourir par le chariot de manutention (A, B), **caractérisé par**
- un dispositif de détection (14) pour la saisie d'irrégularités (46, 48, 50, 52) le long du trajet (42) avec affectation à la position des irrégularités correspondantes,
- un dispositif d'enregistrement (16) pour l'enregistrement des données saisies par le dispositif de détection, et
- un moyen (16) pour influencer la conduite du chariot de manutention (A, B) en fonction de la position respective du chariot de manutention (A, B) et en fonction des données du dispositif de détection enregistrées dans le dispositif d'enregistrement (16), ce moyen (16) pour influencer la conduite du chariot de manutention étant conçu pour influencer les données de commande de la hauteur de levage d'une partie de manutention de charge du chariot de manutention.

2. Système de guidage pour chariots de manutention suivant la revendication 1, le dispositif de détection (14) comprenant des détecteurs optiques ou/et électromagnétiques ou/et mécaniques.

3. Système de guidage pour chariots de manutention suivant la revendication 2, le dispositif de détection présentant au moins un détecteur (12) pour la détermination de la position du chariot de manutention.

4. Système de guidage pour chariots de manutention suivant l'une des revendications 1 à 3, la nature des irrégularités concernées (46, 48, 50, 52) pouvant être détectée automatiquement ou saisie par une entrée manuelle.

5. Système de guidage pour chariots de manutention suivant l'une des revendications 1 à 4, des inégalités du sol (46) pouvant être détectées comme irrégularités le long du trajet (42) à l'aide du dispositif de détection (14).

6. Système de guidage pour chariots de manutention suivant l'une des revendications 1 à 5, des passages étroits, obstacles (48, 50, 52) et similaires pouvant être détectés comme irrégularités le long du trajet (42).

7. Système de guidage pour chariots de manutention suivant l'une des revendications précédentes, les données de commande de conduite du chariot de manutention (A) pouvant être influencées par les moyens d'influence (16) comprenant des données de commande de la vitesse du chariot de manutention ou/et des données de direction du chariot de manutention (A).

8. Système de guidage pour chariots de manutention suivant l'une des revendications précédentes, les données de commande de conduite pouvant être influencées automatiquement par les moyens d'influence (16).

9. Système de guidage pour chariots de manutention suivant l'une des revendications précédentes, celui-ci faisant partie du chariot de manutention (A) et étant emporté par celui-ci.

10. Système de guidage pour chariots de manutention suivant l'une des revendications 1 à 8, celui-ci étant réalisé au moins partiellement comme dispositif non lié au véhicule (30; 70), une connexion de communication pouvant être établie entre le chariot de manutention (A, B) et le dispositif (30) non lié au véhicule pour l'échange mutuel de données saisies ou/et de données de commande de conduite.

11. Système de guidage pour chariots de manutention suivant l'une des revendications précédentes, celui-ci étant conçu pour influencer la conduite de plusieurs chariots de manutention (A, B).

12. Système de guidage pour chariots de manutention suivant l'une des revendications précédentes, celui-ci comprenant des moyens de détermination d'un moment de consigne pour la prochaine maintenance du chariot de manutention en fonction des données du dispositif de détection enregistrées dans le dispositif d'enregistrement, en particulier en fonction de la fréquence avec laquelle le chariot de manutention franchit des positions d'irrégularités détectées.

13. Système de guidage pour chariots de manutention suivant l'une des revendications précédentes, celui-ci comprenant des moyens de comptage de la fréquence avec laquelle le chariot de manutention franchit des positions d'irrégularités détectées.

14. Système de guidage pour chariots de manutention suivant la revendication 12 ou 13, celui-ci comprenant un dispositif d'affichage d'intervalle de maintenance et étant conçu pour afficher le moment de consigne de la prochaine maintenance du chariot de manutention déterminé par le dispositif d'affichage d'intervalle de maintenance.

15. Chariot de manutention (A) équipé d'un système de guidage pour chariots de manutention suivant l'une des revendications précédentes.

16. Flotte de chariots de manutention avec plusieurs chariots de manutention (A, B) dont la conduite peut être influencée par un système de guidage pour chariots de manutention suivant l'une des revendications 1 à 14, au moins un de ceux-ci étant un chariot de manutention (A) suivant la revendication 15.

17. Procédé d'exploitation d'un système de guidage pour chariots de manutention suivant l'une des revendications 1 à 11, pour lequel des données sur les irrégularités (46, 48, 50, 52) le long d'un trajet (42) à parcourir par un chariot de manutention sont saisies en relation avec la position des irrégularités correspondantes, les données saisies étant enregistrées par le dispositif d'enregistrement (16) et traitées de telle façon par les moyens d'influence que des données de commande pour influencer la conduite du chariot de manutention (A, B) sont déterminées à partir des données saisies, ces données de commande comprenant des données pour la commande de la hauteur de levage d'une partie de manutention de charge du chariot de manutention.

18. Procédé suivant la revendication 17, les données saisies ou/et les données de commande de la conduite étant transmises au chariot de manutention (A) ou/et à d'autres chariots de manutention (B) ou/et à une unité de calcul centrale (30).

19. Procédé suivant la revendication 17 ou 18, **caractérisé en ce que** la saisie de données est exécutée pendant un trajet d'apprentissage avec un chariot de manutention (A) suivant la revendication 15.
